(19) Europäisches Patentamt
European Patent Office
Office européen des brevets

(11) Veröffentlichungsnummer : **0 461 389 B1**

(12) # EUROPÄISCHE PATENTSCHRIFT

(45) Veröffentlichungstag der Patentschrift :
**10.08.94 Patentblatt 94/32**

(21) Anmeldenummer : **91107344.3**

(22) Anmeldetag : **07.05.91**

(51) Int. Cl.$^5$ : **C08G 18/60,** C08G 18/80, C08G 18/34, C08G 18/72, C08G 18/08, H01B 3/30, C09D 177/00

(54) **In amidischen Lösungsmitteln gelöste Schmelzklebelacke für hochtemperaturbeständige Beschichtungen.**

(30) Priorität : **16.05.90 DE 4015752**

(43) Veröffentlichungstag der Anmeldung :
**18.12.91 Patentblatt 91/51**

(45) Bekanntmachung des Hinweises auf die Patenterteilung :
**10.08.94 Patentblatt 94/32**

(84) Benannte Vertragsstaaten :
**CH DE ES FR GB IT LI**

(56) Entgegenhaltungen :
**EP-A- 0 399 396**
**DE-A- 3 517 753**
**US-A- 4 672 094**
**JOURNAL OF POLYMER SCIENCE, POLYMER CHEMISTRY EDITION. Bd. 26, Nr. 8, 5. August1988, NEW YORK US Seiten 2263 - 2272; OTSUKI ET AL: 'PREPARATION AND PROPERTIESOF AROMATIC-ALIPHATIC COPOLYAMIDES '**

(73) Patentinhaber : **BASF Lacke + Farben AG**
**Glasuritstrasse 1**
**D-48165 Münster-Hiltrup (DE)**

(72) Erfinder : **Hoessel, Peter, Dr.**
**Salierstrasse 71**
**W-6707 Schifferstadt (DE)**
Erfinder : **Lienert, Klaus, Dr.**
**Bernadottestrasse 54**
**W-2000 Hamburg 50 (DE)**
Erfinder : **Hoffmann, Gerhard, Dr.**
**Pappelstrasse 22**
**W-6701 Otterstadt (DE)**
Erfinder : **Steinhaus, Rudolf**
**Tillauer Strasse 16**
**W-2060 Bad Oldesloe (DE)**

(74) Vertreter : **Karau, Wolfgang, Dr. et al**
**BASF Aktiengesellschaft,**
**Patentabteilung ZDX - C 6**
**D-67056 Ludwigshafen (DE)**

EP 0 461 389 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Schmelzklebelacklösung, enthaltend

A) 5 bis 80 Gew.-% eines Copolyamids, aufgebaut aus Einheiten, die sich ableiten von

$A_1$) organischen Dicarbonsäuren

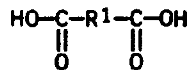

wobei $R^1$ für einen aliphatischen Rest mit 1 bis 20 C-Atomen oder einen aromatischen Rest mit 5 bis 25 C-Atomen steht,

und

$A_2$) einer Mischung von Diisocyanaten aus

$a_{21}$) 20 bis 95 mol.% eines Diisocyanats der allgemeinen Formel

$$OCN\text{-}R^2\text{-}NCO$$

wobei $R^2$ für einen aromatischen Rest mit 5 bis 25 C-Atomen steht,

$a_{22}$) 5 bis 70 mol% eines Diisocyanats der allgemeinen Formel

$$OCN\text{-}R^3\text{-}NCO$$

wobei $R^3$ für den Rest

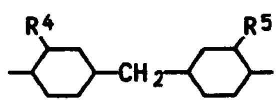

,

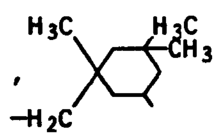

,

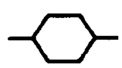

,

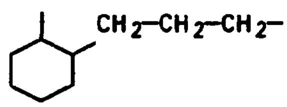

oder einen durch 1 bis 3 $C_1$-$C_4$-Alkylgruppen substituierten linearen aliphatischen Rest mit 3 bis 30 C-Atomen steht und $R^4$ und $R^5$ unabhängig voneinander je eine $C_1$-$C_4$-Alkylgruppe oder ein Wasserstoffatom darstellen, und

$a_{23}$) 0 bis 20 mol% eines Diisocyanats der allgemeinen Formel

$$OCN\text{-}(CH_2)_y\text{-}NCO$$

wobei y eine ganze Zahl im Bereich von 1 bis 20 ist,

und

B) 0,5 bis 30 Gew.-% eines blockierten Di- oder Polyisocyanats,

in

C) einem Lösungsmittel oder Lösungsmittelgemisch aus

$C_1$) 5 bis 100 Gew.-% Dimethylformamid oder Dimethylacetamid

$C_2$) 0 bis 95 Gew.-% N-Methylpyrrolidon

$C_3$) 0 bis 40 Gew.-% von $C_1$ und $C_2$ verschiedenen aliphatischen, cycloaliphatischen oder aromatischen Kohlenwasserstoffen oder Kohlenwasserstoffgemischen mit einem Siedebereich zwischen 80 und 200°C.

Hitzehärtbare Schmelzklebelacke, sog. Backlacke, werden für die Herstellung mechanisch und thermisch beanspruchter Wickelkörper aus mit Lack isolierten Drähten verwendet, deren Windungen mit Hilfe von äußerer Wärmezufuhr oder durch Stromwärme durch Schmelzen und nachfolgendes Verfestigen einer solchen Backlackschicht miteinander verklebt (verbacken) werden.

Als Backlacke können prinzipiell zwei verschiedene Grundtypen eingesetzt werden, nämlich thermoplastische und duromere Systeme.

Aus der US-A 4 505 978 sind thermoplastische Systeme aus teilaromatischen Polyamiden bekannt.

Thermoplastische Systeme weisen generell den Nachteil auf, daß die Wiedererweichungstemperatur nahezu identisch mit der Verbackungstemperatur ist. Eine für hitzebeständige Anwendungen gewünschte hohe Wiedererweichungstemperatur macht eine ebenfalls hohe Verbackungstemperatur erforderlich, bei niedrigen

Verbackungstemperaturen sind wiederum die Wiedererweichungstemperaturen unerwünscht niedrig.

Teilaromatische Polyamidlösungen sind auch aus der DE-A 36 12 372 bekannt. Die Wiedererweichungstemperaturen der aus den Lösungen erhaltenen Schmelzklebelacke werden mit 180 bis 200°C angegeben.

Auch die aus der US-A 4 420 535 bekannten teilaromatischen Systeme können in ihren Eigenschaften nicht voll befriedigen.

Aliphatische Polyamidlösungen weisen gegenüber teilaromatischen Polyamidlösungen den Nachteil auf, daß toxische Lösungsmittel, vor allem Kresol verwendet werden müssen.

Duromere, hitzehärtbare Backlacke gehen beim Verbacken durch eine Vernetzungsreaktion aus einem thermoplastischen Zustand in den ausgehärteten Endzustand über.

Das Problem bei derartigen duromeren, hitzehärtbaren Backlacken besteht darin, daß sowohl die Art des Vernetzers als auch die Kombination des Basisharzes mit dem Vernetzer fein abgestimmt sein muß, damit beim Lackierungsvorgang der thermoplastische Zustand und die Verbackungsfähigkeit erhalten bleibt und gleichzeitig ein möglichst temperaturbeständiger, ausgehärteter Endzustand nach erfolgter Verbackung erreicht wird.

Aus der DE-A 35 17 753 ist eine Polyamidlösung bekannt, bei der durch Zugabe von blockiertem Di- oder Polyisocyanat als Vernetzer ein ausgehärteter duromerer Schmelzklebelack erhalten wird. Die erreichte Wiedererweichungstemperatur ist mit 193°C nach einer Verbackungstemperatur von 180°C (30 min) für hohe Anforderungen noch nicht ausreichend.

Durch die Zugabe von blockierten Polyisocyanatvernetzern sollte die Lagerstabilität von Schmelzklebelacklösungen nicht beeinträchtigt werden. Bereits in der Schmelzklebelacklösung ablaufende Vernetzungsreaktionen, erkennbar an einem Viskositätsanstieg, erhöhen die notwendige Verbackungstemperatur und beeinträchtigen generell die Verbackungsfähigkeit.

Die ausschließliche Verwendung von N-Methylpyrrolidon als Lösungsmittel zur Fertigung von teilaromatischen Polyamiden, welche in der US-A-4505978 der DE 3 612 372 A 1 und der EP-A-0399396 beschrieben ist, ermöglicht z.Z. aufgrund des hohen Marktpreises für N-Methylpyrrolidon keine wirtschaftliche Fertigung von Schmelzklebelacklösungen. Darüber hinaus sind mit N-Methylpyrrolidon als Lösungsmittel nur geringe Festgehalte der Lösungen möglich, da bei höheren Festgehalten die Viskosität zu stark ansteigt.

Aufgabe der vorliegenden Erfindung war es daher, Schmelzklebelacklösungen für hitzebeständige Beschichtungen zur Verfügung zu stellen, welche bei der Fertigung andere, wirtschaftlichere Lösungsmittel- bzw. Lösungsmittelgemische enthalen. Wegen der Toxizität sollte kein Kresol als Lösungsmittel verwendet werden. Gleichzeitig sollten höhere Festgehalte und eine hohe Lagerstabilität der Schmelzklebelacklösung erzielt werden. Die aus den Lösungen erhaltenen Schmelzklebelacke sollten gute thermomechanische Eigenschaften aufweisen und sich durch hohe Wiedererweichungstemperaturen bei niedrigen Verbackungstemperaturen auszeichnen.

Erfindungsgemäß wird diese Aufgabe gelöst durch Schmelzklebelacklösungen, enthaltend

A) 5 bis 80 Gew.-% eines Copolyamids, aufgebaut aus Einheiten, die sich ableiten von

$A_1$) organischen Dicarbonsäuren

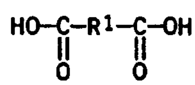

wobei $R^1$ für einen aliphatischen Rest mit 1 bis 20 C-Atomen oder einen aromatischen Rest mit 5 bis 25 C-Atomen steht,

und

$A_2$) einer Mischung von Diisocyanaten aus

$a_{21}$) 20 bis 95 mol.% eines Diisocyanats der allgemeinen Formel

$$OCN-R^2-NCO$$

wobei $R^2$ für einen aromatischen Rest mit 5 bis 25 C-Atomen steht,

$a_{22}$) 5 bis 70 mol% eines Diisocyanats der allgemeinen Formel

$$OCN-R^3-NCO$$

wobei $R^3$ für den Rest

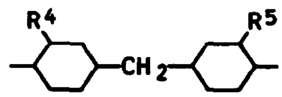 , 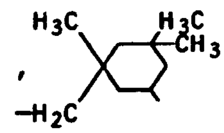 ,

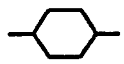 , 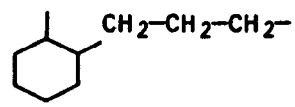

oder einen durch 1 bis 3 $C_1$-$C_4$-Alkylgruppen substituierten linearen aliphatischen Rest mit 3 bis 30 C-Atomen steht und $R^4$ und $R^5$ unabhängig voneinander je eine $C_1$-$C_4$-Alkylgruppe oder ein Wasserstoffatom darstellen,

$a_{23}$) 0 bis 20 mol% eines Diisocyanats der allgemeinen Formel

$$OCN\text{-}(CH_2)_y\text{-}NCO$$

wobei y eine ganze Zahl im Bereich von 1 bis 20 ist,

und

B) 0,5 bis 30 Gew.-% eines blockierten Di- oder Polyisocyanats

in

C) einem Lösungsmittel oder Lösungsmittelgemisch aus

$C_1$) 5 bis 100 Gew.-% Dimethylformamid oder Dimethylacetamid

$C_2$) 0 bis 95 Gew.-% N-Methylpyrrolidon

$C_3$) 0 bis 40 Gew.-% von $C_1$ und $C_2$ verschiedenen aliphatischen, cycloaliphatischen oder aromatischen Kohlenwasserstoffen oder Kohlenwasserstoffgemischen mit einem Siedebereich zwischen 80 und 200°C.

In den Dicarbonsäuren $A_1$

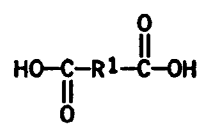

kann $R^1$ einen aliphatischen Rest mit 1 bis 20 C-Atomen oder einen aromatischen Rest mit 5 bis 25 C-Atomen darstellen. Bei den aliphatischen Dicarbonsäuren kann es sich um lineare aliphatische, cycloaliphatische oder heterocyclische Dicarbonsäuren handeln, welche wiederum einzeln oder im Gemisch mit anderen aliphatischen Dicarbonsäuren verwendet werden können.

Bevorzugt bei den aliphatischen Dicarbonsäuren sind lineare aliphatische Dicarbonsäuren

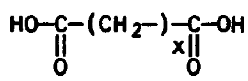

in denen x eine ganze Zahl im Bereich von 1 bis 16 darstellt, besonders bevorzugt sind lineare aliphatische Dicarbonsäuren, in denen x einen Wert im Bereich von 3 bis 12 hat, ganz besonders bevorzugt sind Azelain- und Sebacinsäure sowie deren Mischungen.

Als aromatische Dicarbonsäuren können Cyclopentadienyl, Phenyl-, Naphthyl-, und Diphenylcarbonsäuren sowie Mischungen dieser Säuren, bei denen die aromatischer Ringsysteme gegebenfalls substituiert sind, eingesetzt werden. Substituenten können z.B. Alkyl- oder Alkoxygruppen, bevorzugt $C_1$-$C_4$-Alkyl- oder Alkoxygruppen sein. Die aromatischen Ringsysteme können sowohl kondensiert, als auch über Heteroatome oder Kohlenstoffatome bzw. -ketten verbrückt sein.

Beispiele für die zuletzt genannten Dicarbonsäuren sind Diphenylmethan-, Diphenylsulfon- oder Diphenyloxiddicarbonsäuren. Es können auch Gemische von aromatischen Dicarbonsäuren eingesetzt werden.

Bevorzugt werden gegebenenfalls substituierte Phenyl-, Naphthyl- oder Diphenylmethandicarbonsäuren eingesetzt.

Besonders bevorzugt sind Isophthalsäure, Terephthalsäure und Naphthalindicarbonsäuren.

Besonders bevorzugt verwendet man ein Gemisch aus aliphatischen und aromatischen Dicarbonsäuren,

wobei das Molverhältnis von aliphatischen zu aromatischen Dicarbonsäuren 6:1 bis 1:2, besonders bevorzugt 4:1 bis 1:1 beträgt. Ganz besonders bevorzugt ist die Verwendung einer Mischung aus aliphatischen und aromatischen Dicarbonsäuren im Molverhältnis 2,5 bis 1,5:1, insbesondere etwa 2:1.

Bei den eingesetzten Diisocyanaten $A_2$ handelt es sich um eine Mischung von Diisocyanaten aus

$a_{21}$) 20 bis 95 mol.% eines Diisocyanats der allgemeinen Formel

$$OCN\text{-}R^2\text{-}NCO$$

wobei $R^2$ für einen aromatischen Rest mit 5 bis 25 C-Atomen steht,

$a_{22}$) 5 bis 70 mol% eines Diisocyanats der allgemeinen Formel

$$OCN\text{-}R^3\text{-}NCO$$

wobei $R^3$ für den Rest

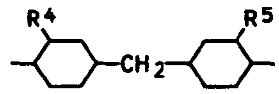 , 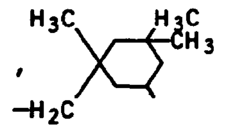 ,

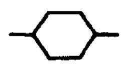 , 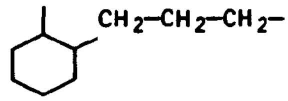

oder einen durch 1 bis 3 $C_1$-$C_4$-Alkylgruppen substituierten linearen aliphatischen Rest mit 3 bis 30 C-Atomen steht und $R^4$ und $R^5$ unabhängig voneinander je eine $C_1$-$C_4$-Alkylgruppe oder ein Wasserstoffatom darstellen,

$a_{23}$) 0 bis 20 mol% eines Diisocyanats der allgemeinen Formel

$$OCN\text{-}(CH_2)_y\text{-}NCO$$

wobei y eine ganze Zahl im Bereich von 1 bis 20 ist.

Geeignete Diisocyanate $a_{21}$ sind z.B. Cyclopentadienyl-, Phenyl-. Naphthyl- oder Diphenyldiisocyanate, bei denen die aromatischen Ringgruppen gegebenenfalls substituiert sind. Substituenten können z.B. Alkyl- oder Alkoxyruppen, bevorzugt $C_1$ bis $C_4$ Alkyl- oder Alkoxygruppen sein. Die aromatischen Ringsysteme können sowohl kondensiert als auch über Heteroatome oder Kohlenstoffatome bzw. -ketten verbrückt sein. Beispiele sind 2,4'-Diphenylmethandiisocyanat, 4,4'-Diphenylmethandiisocyanat, 4,4'-Diphenyloxiddiisocyanat, Diphenylsulfondiisocyanat, 1,3-Phenylendiisocyanat, 1,4-Phenylendiisocyanat, 2,4-Toluylendiisocyanat.

Bevorzugt werden gegebenenfalls substituierte Phenyl-, Naphthyl- oder Diphenylmethandiisocyanate eingesetzt.

Besonders bevorzugt finden 2,4-Toluylendiisocyanat und 4,4'-Diphenylmethandiisocyanat Verwendung.

Als Komponente $a_{21}$ kann ein einziges aromatisches Diiocyanat oder ein Gemisch von aromatischen Diisocyanaten eingesetzt werden.

Bei den Diisocyanten $a_{22}$ handelt es sich um Diisocyanate der allgemeinen Formel

$$OCN\text{-}R^3\text{-}NCO$$

wobei $R^3$ für den Rest

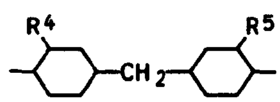 , 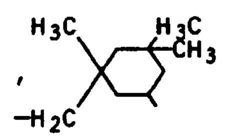 ,

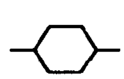 , 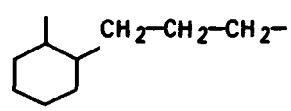

oder einen durch 1 bis 3 $C_1$-$C_4$-Alkylgruppen substituierten linearen aliphatischen Rest mit 3 bis 30 bevorzugt 5 bis 20 C-Atomen steht und $R^4$ und $R^5$ jeweils eine $C_1$ bis $C_4$ Alkylgruppe oder ein Wasserstoffatom darstellen. Insbesondere sind $R^4$ und $R^5$ Methyl- oder Ethylgruppen.

Besonders bevorzugt verwendet man als Diisocyanate $a_{22}$ 3,3'-Dimethyl-4,4'-dicyclohexylmethandiisocyanat, Isophorondiisocyanat, 2-(3-Isocyanatopropyl)cyclohexylisocyanat und Trimethylhexamethylendiisocyanat. Es können auch Gemische der als Diisocyanate $a_{22}$ angeführten Verbindungen eingesetzt werden.

Bei den Diisocyanaten $a_{23}$ gemäß Anspruch 1 handelt es sich um lineare aliphatische Diisocyanate der allgemeinen Formel

$$OCN-(CH_2)_y-NCO$$

wobei y eine ganze Zahl im Bereich von 1 bis 20 darstellt, die einzeln oder im Gemisch Verwendung finden. Bevorzugt ist y 4 bis 15, besonders bevorzugt 6 bis 12.

Die Gemische von Diisocyanaten $a_{21}$ bis $a_{23}$ werden in folgenden molaren Verhältnissen eingesetzt:
20 bis 95 mol.%, bevorzugt 30 bis 90 mol.% der Diisocyanate $a_{21}$),
5 bis 70 mol.%, bevorzugt 10 bis 60 mol.% der Diisocyanate $a_{22}$) und
0 bis 20 mol.%, bevorzugt 0 bis 10 mol.% der Diisocyanate $a_{23}$)

Besonders bevorzugt sind
40 bis 80 mol.% der Diisocyanate $a_{21}$)
20 bis 60 mol.% der Diisocyanate $a_{22}$)

Ganz besonders bevorzugt ist ein etwa äquimolares Gemisch aus 2,4-Toluylendiisocyanat, 4,4′-Diphenylmethandiisocyanat und einem Isomerengemisch aus 2,2,4- und 2,4,4-Trimethylhexamethylendiisoxyanat (HÜLS AG).

Das molare Verhältnis der Summe der eingesetzten Dicarbonsäuren zur Summe der eingesetzten Diisocyanate beträgt vorzugsweise 1:1 bis 1:0,8, insbesondere 1:0,99 bis 1:0,95.

Als Blockierungsmittel für die Di- oder Polyisocyanate der Komponente B werden bevorzugt Lactame der allgemeinen Formel

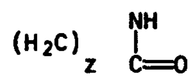

wobei z eine ganze Zahl im Bereich 3 bis 22 ist, eingesetzt, um bei der später erfolgenden Verbackung die Freisetzung toxischer Gase, die z.B. bei der Verdampfung von Phenolen auftritt, zu vermeiden.

Besonders bevorzugt wird Caprolactom als Blockierungsmittel eingesetzt. Als Polyisocyanate kommen z.B. Diphenylmethandiisocyanat, Phenylendiisocyanat, Toluylendiisocyanat, Lupranat® MS (BASF AG) und Desmodur® L (BAYER AG) in Frage. Bei Lupranat® MS handelt es sich um ein Gemisch aus 4,4′-, 2,4′-Diphenylmethandiisocyanat und Oligomeren von Diphenylmethandiisocyanaten.

Bevorzugt wird Desmodur® L als Polyisoocyanat verwendet, wobei es sich um ein Reaktionsprodukt aus einem Toluylendiisocyanat und einem Polyalkoholgemisch handelt.

Den Lösungen können in der Lackindustrie übliche Verlaufsmittel und sonstige Hilfsmittel wie Kollophonium, Benztriazol usw. in üblichen Mengen z.B. bis 1 Gew.-% zugesetzt werden.

Zur Herstellung des Copolyamid A können die oben genannten Ausgangsverbindungen in den Lösungen bzw. Lösungsmittelgemischen C vorgelegt und das Gemisch innerhalb von 1 bis 20 Stunden auf 150 bis 190°C unter Rühren aufgeheizt werden. Zunächst kann eine 20 bis 80 %ige Lösung der Umsetzungsprodukte dargestellt werden, welche nach Abschluß der Reaktion auf eine 10 bis 50 gew.-%ige Lösung mit Viskositäten von 100 bis 5000 mPas, vorzugsweise 200 bis 2000 mPas (23°C) eingestellt werden kann. Vorzugsweise wird eine 30 bis 50 gew.-%ige Lösung der Umsetzungsprodukte hergestellt. Besonders bevorzugt ist die Herstellung von 35 bis 40 gew.-%igen Lösungen der Umsetzungsprodukte. Als Lösungsmittel für die Umsetzung wird bevorzugt ein Gemisch aus Dimethylformamid/N-Methylpyrrolidon mit einem Gewichtsverhältnis von 10:90 bis 50:50 verwendet.

Nach der Reaktion der Dicarbonsäuren mit den Diisocyanaten werden vor, während oder nach der Verdünnung mit Lösungsmitttel 0,5 bis 30 Gew.-% eines blockierten Polyisocyanates B), bezogen auf die Lösung bei einer Temperatur von 20 bis 120°C unter fortwährender Durchmischung zugesetzt.

Die erhaltenen Schmelzklebelacklösungen zeigen über einen Zeitraum von 6 Monaten keinen merklichen Viskositätsanstieg, sie zeichnen sich daher durch ihre gute Lagerstabilität aus. Bei gleichem Festgehalt ist die Viskosität der erhaltenen Schmelzklebelacklösungen im Vergleich zu Lösungen, welche nur N-Methylpyrrolidon als Lösungsmittel enthalten, deutlich geringer.

Die Applikation der erfindungsgemäßen Backlacklösungen erfolgt im allgemeinen auf Drähte aus Kupfer oder aus Aluminium, welche mit einer für die Elektroindustrie üblichen Isolierschicht aus hochtemperaturbeständigen Harzen, wie Polyesterimiden, Polyestern oder Polyamidimiden überzogen sind. Diese isolierten Drähte werden zur Trocknung der einzelnen Backlackschichten bei Einbrenntemperaturen z.B. von 200 bis 600°C, bevorzugt 300 bis 400°C und Lackiergeschwindigkeiten z.B. von 10 bis 60 m/min, bevorzugt 25 bis 35 m/min lackiert.

Auf diese Weise erhält man lagerstabile und wickelfeste Backlackdrähte, welche in Form der entsprechenden Spulenkörper durch Heißluft oder durch Stromwärme verbacken werden können.

Die erfindungsgemäßen Schmelzklebelacklösungen, bevorzugt solche, welche mit Lactamen blockierte Polyisocyanate enthalten, sind problemlos applizierbar. Bei der beschriebenen Beschichtung der Drähte und Trocknung der Lackschicht findet noch keine zur Aushärtung ausreichende Vernetzung statt. Die aus den Drähten erhaltenen Spulenkörper sind daher bei relativ niedrigen Temperarturen von ca. 180°C verbackbar und zeigen nach Verbackung ein hohes Eigenschaftsniveau mit hohen Wiedererweichungstemperaturen und hoher Verbackungsfestigkeit.

Beispiel 1

202,0 g (1,000 mol) Sebacinsäure und 83,0 g (0,500 mol) Terephthalsäure wurden in einem Gemisch aus 580 g N-Methylpyrrolidon und 290 g Dimethylacetamid vorgelegt. Sofort nach der Zugabe von 86,2 g (0,495 mol) 2,4-Toluylendiisocyanat, 123,8 g (0,495 mol) 4,4'-Diphenylmethandiisocyanat und 104,0 g (0,495 mol) Trimethylhexamethylendiisocyanat (Gemisch aus den 2,2,4- und 2,4,4-Isomeren; HÜLS AG) wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 4200 mPas bei 35 % Festgehalt. Nach der Zugabe von 92,6 g einer 50 %igen Lösung von mit Caprolactam blockiertem Desmodur L® (BAYER AG) in Dimethylacetamid wurde der Feststoffgehalt mit Xylol auf 23 % eingestellt.

Die Viskosität der 23 %igen Lösung betrug 210 mPas bei 23°C. Diese Lösung war über einen Zeitraum von 6 Monaten im Temperaturbereich zwischen -10 und 60°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:

| Lackierofen-Temperatur (vorn/hinten) Ofenlänge 2,50 m | Verbackungsbedingungen | Wiedererweichungs-temperatur: |
|---|---|---|
| 320/340°C | 30 Minuten bei 180°C | 286°C |
| 340/360°C | 30 Minuten bei 180°C | 290°C |
| 360/380°C | 30 Minuten bei 180°C | 286°C |

Die Prüfung am sog. Drillstab (R. Steinhaus, Proc. of the 15th Electronic/Electrical Insulation Conference, Chicago 1981, IEEE Publ. Nr. 81/CH 1717 - 8/81; S. 56 (1981), und R. Steinhaus, Proc. of the 18th Electronic/Electrical Insulation Conference, Chicago 1987, IEEE Publ. Nr. 87/CH 2451-.1, S. 152 (1987)), zeigte folgende Verbackungsfestigkeiten:
23°C: 280 Newton; 130°C: 170 Newton; 155°C: 50 Newton.

Beispiel 2

146,1 g (1,000 mol) Adipinsäure und 83,0 g (0,500 mol) Terephthalsäure wurden in einem Gemisch aus 435,0 g N-Methylpyrrolidon und 435,0 g Dimethylacetamid vorgelegt. Sofort nach der Zugabe von 86,2 g (0,495 mol) 2,4-Toluylendiisocyanat, 123,8 g (0,495 mol) 4,4'-Diphenylmethandiisocyanat und 104,0 g (0,495 mol) Trimethylhexamethylendiisocyanat (Gemisch aus den 2,2,4- und 2,4,4-Isomeren) wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 3600 mPas bei 35 % Festgehalt. Nach der Zugabe von 130,2 g einer 50 %igen Lösung von mit Caprolactam blockiertem Desmodur® L (BAYER AG) in Dimethylacetamid wurde der Feststoffgehalt mit Solvesso 150 (Gemisch von aliphatischen und aromatischen Kohlenwasserstoffen mit einem Siedebereich zwischen 80 und 200°C) auf 25 % eingestellt.

Die Viskosität der 25 %igen Lösung betrug 240 mPas bei 23°C. Diese Lösung war über einen Zeitraum von 6 Monaten im Temperaturbereich zwischen -10 und 60°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:

| Lackierofen-Temperatur | Verbackungsbedingungen | Wiedererweichungs-temperatur: |
|---|---|---|
| 320/340°C | 30 Minuten bei 190°C | 274°C |
| 340/360°C | 30 Minuten bei 190°C | 271°C |
| 360/380°C | 30 Minuten bei 190°C | > 290°C |

Verbackungsfestigkeiten:
23°C: 280 Newton; 130°C: 180 Newton; 155°C: 50 Newton.

Beispiel 3

202,0 g (1,000 mol) Sebacinsäure und 83,0 g (0,500 mol) Terephthalsäure wurden in 870,0 g Dimethylacetamid vorgelegt. Sofort nach der Zugabe von 86,2 g (0,495 mol) 2,4-Toluylendiisocyanat, 123,8 g (0,495 mol) 4,4'-Diphenylmethandiisocyanat und 110,0 g (0,495 mol) Isophorondiisocyanat (HÜLS AG) wurde das Gemisch auf 80°C aufgeheizt, mit 10°C/Stunde auf 170°C eingestellt und diese Temperatur für eine Stunde gehalten. Nach dem Abkühlen auf 23°C betrug die Viskosität 3250 mPas bei 35 % Festgehalt. Nach der Zugabe von 92,6 g einer 50 %igen Lösung von mit Caprolactam blockiertem Desmodur® L (BAYER AG) in Dimethylacetamid wurde der Feststoffgehalt mit Solvesso 150 auf 25 % eingestellt.

Die Viskosität der 25 %igen Lösung betrug 210 mPas bei 23°C. Diese Lösung war über einen Zeitraum von 6 Monaten im Temperaturbereich zwischen -10 und 60°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:

| Lackierofen-Temperatur | Verbackungsbedingungen | Wiedererweichungs-temperatur: |
|---|---|---|
| 320/340°C | 30 Minuten bei 180°C | 250°C |
| 340/360°C | 30 Minuten bei 180°C | 264°C |
| 360/380°C | 30 Minuten bei 180°C | 274°C |

Verbackungsfestigkeiten:
23°C: 300 Newton; 130°C: 182 Newton; 155°C: 55 Newton.

Beispiel 4

202,0 g (1,000 mol) Sebacinsäure und 83,0 g (0,500 mol) Terephthalsäure wurden in einem Gemisch aus 571,5 g N-Methylpyrrolidon und 285,7 g Dimethylacetamid vorgelegt. Sofort nach der Zugabe von 95,7 g (0,549 mol) 2,4-Toluylendiisocyanat, 112,5 g (0,500 mol) 4,4'-Diphenylmethandiisocyanat und 96,2 g (0,462 mol) 2-(3-Isocyanatopropyl)cyclohexylisocyanat wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 3120 mPas bei 35 % Festgehalt. Nach der Zugabe von 92,6 g einer 50 %igen Lösung von mit Caprolactam blockiertem Desmodur® L (BAYER AG) in Dimethylacetamid wurde der Feststoffgehalt mit Solvesso 150 auf 24 % eingestellt.

Die Viskosität der 24 %igen Lösung betrug 240 mPas bei 23°C. Diese Lösung war über einen Zeitraum von 6 Monaten im Temperaturbereich zwischen -10 und 60°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:

| Lackierofen-Temperatur | Verbackungsbedingungen | Wiedererweichungs-temperatur: |
|---|---|---|
| 320/340°C | 30 Minuten bei 180°C | 280°C |
| 340/360°C | 30 Minuten bei 180°C | 282°C |
| 360/380°C | 30 Minuten bei 180°C | > 290°C |

Verbackungsfestigkeiten:
23°C: 290 Newton; 130°C: 165 Newton; 155°C: 50 Newton.

Vergleichsbeispiel 1

Zum Vergleich wurde ein handelsüblicher Backlack (XWE-1539, Schenectady) auf Polyamidbasis geprüft: Der Festgehalt betrug 17 % bei einer Viskosität von 200 mPas.

| Lackierofen-Temperatur | Verbackungsbedingungen | Wiedererweichungs temperatur: |
|---|---|---|
| 320/340°C | 30 Minuten bei 180°C | 194°C |
| 340/360°C | 30 Minuten bei 180°C | 196°C |
| 360/380°C | 30 Minuten bei 180°C | 188°C |

Die Prüfung am sog. Drillstab zeigte folgende Verbackungsfestigkeiten:
23°C: 300 Newton; 130°C: 182 Newton; 155°C: 55 Newton.

Vergleichsbeispiel 2

Zum Vergleich wurde ein in reinem N-Methylpyrrolidon gefertigter Schmelzklebelack geprüft:

202,0 g (1,000 mol) Sebacinsäure und 83,0 g (0,500 mol) Terephthalsäure wurden in 870,0 g N-Methylpyrrolidon vorgelegt. Sofort nach der Zugabe von 86,2 g (0,495 mol) 2,4-Toluylendiisocyanat, 123,8 g (0,495 mol) 4,4'-Diphenylmethandiisocyanat und 104,0 g (0,495 mol) Trimethylhexamethylendiisocyanat (Gemisch aus den 2,2,4- und 2,4,4-Isomeren; HÜLS AG) wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 7620 mPas bei 35 % Festgehalt. Nach der Zugabe von 92,6 g einer 50 %igen Lösung von mit Caprolactam blockiertem Desmodur® L (BAYER AG) in Dimethylacetamid wurde der Feststoffgehalt mit Solvesso 150 auf 20 % eingestellt.

Die Viskosität der 20 %igen Lösung betrug 200 mPas bei 23°C. Diese Lösung war über einen Zeitraum von 6 Monaten im Temperaturbereich zwischen -10 und 45°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:

| Lackierofen-Temperatur | Verbackungsbedingungen | Wiedererweichungs-temperatur: |
|---|---|---|
| 320/340°C | 30 Minuten bei 180°C | 255°C |
| 340/360°C | 30 Minuten bei 180°C | 268°C |
| 360/380°C | 30 Minuten bei 180°C | 250°C |

Verbackungsfestigkeiten:

23°C: 280 Newton; 130°C: 170 Newton; 155°C: 40 Newton.

## Patentansprüche

1. Schmelzklebelacklösung, enthaltend

   A) 5 bis 80 Gew.-% eines Copolyamids, aufgebaut aus Einheiten, die sich ableiten von

   $A_1$) organischen Dicarbonsäuren

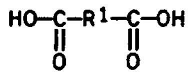

   wobei $R^1$ für einen aliphatischen Rest mit 1 bis 20 C-Atomen oder einen aromatischen Rest mit 5 bis 25 C-Atomen steht

   und

   $A_2$) einer Mischung von Diisocyanaten aus

   $a_{21}$) 20 bis 95 mol.% eines Diisocyanats der allgemeinen Formel

$$OCN\text{-}R^2\text{-}NCO$$

   wobei $R^2$ für einen aromatischen Rest mit 5 bis 25 C-Atomen steht,

   $a_{22}$) 5 bis 70 mol% eines Diisocyanats der allgemeinen Formel

$$OCN\text{-}R^3\text{-}NCO$$

   wobei $R^3$ für den Rest

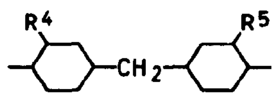 , 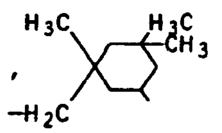 ,

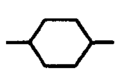 , 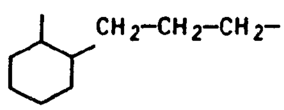

   oder einen durch 1 bis 3 $C_1$-$C_4$-Alkylgruppen substituierten linearen aliphatischen Rest mit 3 bis 30 C-Atomen steht und $R^4$ und $R^5$ unabhängig voneinander je eine $C_1$-$C_4$-Alkylgruppe oder ein Wasserstoffatom darstellen,

   $a_{23}$) 0 bis 20 mol% eines Diisocyanats der allgemeinen Formel

$$OCN\text{-}(CH_2)_y\text{-}NCO$$

   wobei y eine ganze Zahl im Bereich von 1 bis 20 ist,

   und

   B) 0,5 bis 30 Gew.-% eines blockierten Di- oder Polyisocyanats

   in

   C) einem Lösungsmittel oder Lösungsmittelgemisch aus

   $C_1$) 5 bis 100 Gew.-% Dimethylformamid oder Dimethylacetamid

   $C_2$) 0 bis 95 Gew.-% N-Methylpyrrolidon

   $C_3$) 0 bis 40 Gew.-% von $C_1$ und $C_2$ verschiedenen aliphatischen, cycloaliphatischen oder aromatischen Kohlenwasserstoffen oder Kohlenwasserstoffgemischen mit einem Siedebereich zwischen 80 und 200°C.

2. Schmelzklebelacklösung nach Anspruch 1, dadurch gekennzeichnet, daß das Copolyamid die Verbindungen $A_1$ und $A_2$ im molaren Verhältnis 1:1 bis 1:0,8 einpolymerisiert enthält.

3. Schmelzklebelacklösung nach Anspruch 2, dadurch gekennzeichnet, daß das molare Verhältnis $A_1$:$A_2$ 1:0,99 bis 1:0,95 beträgt.

4. Schmelzklebelacklösung nach einem der Ansprüche 1 bis 3, dadurch gekennzeichnet, daß sich die organischen Dicarbonsäuren $A_1$ aus aliphatischen und aromatischen Dicarbonsäuren im molaren Verhältnis

6:1 bis 1:2 zusammensetzen.

5. Schmelzklebelacklösung nach Anspruch 4, dadurch gekennzeichnet, daß sich die organischen Dicarbonsäuren $A_1$ aus aliphatischen und aromatischen Dicarbonsäuren im molaren Verhältnis 2,5:1 bis 1,5:1 zusammensetzen.

6. Schmelzklebelacklösung nach einem der Ansprüche 1 bis 5, dadurch gekennzeichnet, daß es sich bei der Dicarbonsäure $A_1$ um Sebacinsäure, Azelainsäure, Terephthalsäure oder deren Mischungen handelt.

7. Schmelzklebelacklösung nach einem der Ansprüche 1 bis 6, dadurch gekennzeichnet, daß es sich bei dem Diisocyanat $a_{22}$ um Trimethylhexamethylendiisocyanate handelt.

8. Schmelzklebelacklösung nach einem der Ansprüche 1 bis 7, dadurch gekennzeichnet, daß es sich bei den Diisocyanaten $A_2$ um ein Gemisch aus 2,4-Toluylendiisocyanat, Diphenylmethandiisocyanat und Trimethylhexamethylen-diisocyanaten handelt.

9. Schmelzklebelacklösung nach einem der Ansprüche 1 bis 8, dadurch gekennzeichnet, daß die blockierten Di- oder Polyisocyanate mit Lactamen der allgemeinen Formel

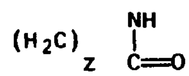

wobei z eine ganze Zahl im Bereich von 3 bis 22 ist, blockiert sind.

10. Verwendung der Schmelzklebelacklösung nach den Ansprüchen 1 bis 9 zur Beschichtung von mit Elektroisolierlack vorbeschichteten Drähten.

11. Mit einem Schmelzklebelack beschichteter Draht erhalten unter Verwendung einer Schmelzklebelacklösung gemäß den Ansprüchen 1 bis 9.

## Claims

1. A self-bonding enamel solution, containing
   A) from 5 to 80% by weight of a copolyamide composed of units which are derived from
   $A_1$) organic dicarboxylic acids

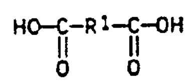

where $R^1$ is an aliphatic radical of 1 to 20 carbon atoms or an aromatic radical of 5 to 25 carbon atoms,
and
$A_2$) a mixture of diisocyanates comprising
$a_{21}$) from 20 to 95 mol % of a diisocyanate of the general formula

$$OCN\text{-}R^2\text{-}NCO$$

where $R^2$ is an aromatic radical of 5 to 25 carbon atoms,
$a_{22}$) from 5 to 70 mol % of a diisocyanate of the general formula

$$OCN\text{-}R^3\text{-}NCO$$

where $R^3$ is

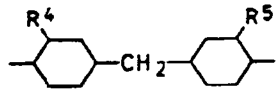 , 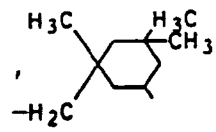 ,

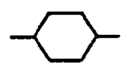 , 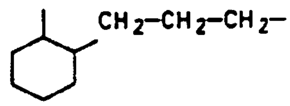

or a linear aliphatic radical of 3 to 30 carbon atoms which is substituted by from 1 to 3 $C_1$-$C_4$-alkyl groups and $R^4$ and $R^5$, independently of one another, are each $C_1$-$C_4$-alkyl or hydrogen, and

$a_{23}$) from 0 to 20 mol % of a diisocyanate of the general formula

$$OCN-(CH_2)_y-NCO$$

where y is an integer from 1 to 20,

and

B) from 0.5 to 30% by weight of a blocked di- or polyisocyanate

in

C) a solvent or solvent mixture comprising

$C_1$) from 5 to 100% by weight of dimethylformamide or dimethylacetamide,

$C_2$) from 0 to 95% by weight of N-methylpyrrolidone and

$C_3$) from 0 to 40% by weight of aliphatic, cycloaliphatic or aromatic hydrocarbons or hydrocarbon mixtures which differ from $C_1$ and $C_2$ and have a boiling range of from 80 to 200°C.

2. A self-bonding enamel solution as claimed in claim 1, wherein the copolyamide contains the compounds $A_1$ and $A_2$ as polymerized units in a molar ratio of from 1 : 1 to 1 : 0.8.

3. A self-bonding enamel solution as claimed in claim 2, wherein the molar ratio $A_1 : A_2$ is from 1 : 0.99 to 1 : 0.95.

4. A self-bonding enamel solution as claimed in any of claims 1 to 3, wherein the organic dicarboxylic acids A1 are composed of aliphatic and aromatic dicarboxylic acids in a molar ratio of from 6 : 1 to 1 : 2.

5. A self-bonding enamel solution as claimed in claim 4, wherein the organic dicarboxylic acids A1 are composed of aliphatic and aromatic dicarboxylic acids in a molar ratio of from 2.5 : 1 to 1.5 : 1.

6. A self-bonding enamel solution as claimed in any of claims 1 to 5, wherein the dicarboxylic acid $A_1$ is sebacic acid, azelaic acid, terephthalic acid or a mixture thereof.

7. A self-bonding enamel solution as claimed in any of claims 1 to 6, wherein the diisocyanate $a_{22}$ is trimethylhexamethylene diisocyanate.

8. A self-bonding enamel solution as claimed in any of claims 1 to 7, wherein the diisocyanates $A_2$ comprise a mixture of toluylene 2,4-diisocyanate, diphenylmethane diisocyanate and trimethylhexamethylene diisocyanates.

9. A self-bonding enamel solution as claimed in any of claims 1 to 8, wherein the blocked di- or polyisocyanates are blocked with lactams of the general formula

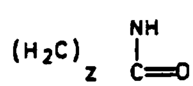

where z is an integer from 3 to 22.

10. Use of a self-bonding enamel solution as claimed in any of claims 1 to 9 for coating wires precoated with electrical insulation enamel.

**11.** A wire coated with a self-bonding enamel and obtained using a self-bonding enamel solution as claimed in any of claims 1 to 9.

## Revendications

**1.** Solution de vernis collant à fusion, contenant

A) 5 à 80% en poids d'un copolyamide composé de motifs qui dérivent

$A_1$) de diacides carboxyliques organiques

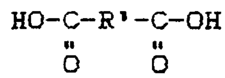

$R^1$ étant mis pour un reste aliphatique à 1-20 atomes de carbone ou pour un reste aromatique à 5-25 atomes de carbone

et

$A_2$) d'un mélange de diisocyanates composé

$a_{21}$) de 20 à 95% en moles d'un diisocyanate de formule générale

$$OCN\text{-}R^2\text{-}NCO$$

$R^2$ étant mis pour un reste aromatique à 5-25 atomes de carbone,

$a_{22}$) de 5 à 70% en moles d'un diisocyanate de formule générale

$$OCN\text{-}R^3\text{-}NCO$$

$R^3$ étant mis pour un reste

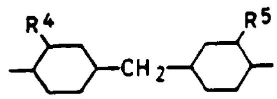 , 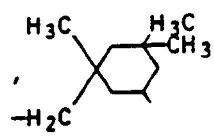 ,

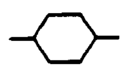 , 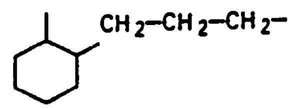

ou pour un reste aliphatique linéaire à 3-30 atomes de carbone, substitué par 1 à 3 groupements alkyle en $C_1$-$C_4$, et $R^4$ et $R^5$ représentant chacun, indépendamment l'un de l'autre, un groupement alkyle en $C_1$-$C_4$ ou un atome d'hydrogène, et

$a_{23}$) de 0 à 20% en moles d'un diisocyanate de formule générale

$$OCN\text{-}(CH_2)_y\text{-}NCO$$

y étant un nombre entier compris entre 1 et 20,

et

B) 0,5 à 30% en poids d'un di- ou polyisocyanate bloqué,

dans

C) un solvant ou un mélange de solvants composé

$C_1$) de 5 à 100% en poids de diméthylformamide ou de diméthylacétamide,

$C_2$) de 0 à 95% en poids de N-méthylpyrrolidone et

$C_3$) de 0 à 40% en poids d'hydrocarbures aliphatiques, cycloaliphatiques ou aromatiques différents de $C_1$ et de $C_2$ ou de mélanges d'hydrocarbures ayant une plage d'ébullition entre 80 et 200°C.

**2.** Solution de vernis collant à fusion selon la revendication 1, caractérisée en ce que le copolyamide contient en liaison polymère les composés $A_1$ et $A_2$ dans un rapport molaire de 1:1 à 1:0,8.

**3.** Solution de vernis collant à fusion selon la revendication 2, caractérisée en ce que le rapport molaire $A_1$:$A_2$ est compris entre 1:0,99 et 1:0,95.

**4.** Solution de vernis collant à fusion selon l'une quelconque des revendications 1 à 3, caractérisée en ce

que les diacides carboxyliques organiques $A_1$ se composent de diacides carboxyliques aliphatiques et aromatiques dans un rapport molaire de 6:1 à 1:2.

**5.** Solution de vernis collant à fusion selon la revendication 4, caractérisée en ce que les diacides carboxyliques organiques $A_1$ se composent de diacides carboxyliques aliphatiques et aromatiques dans un rapport molaire de 2,5:1 à 1,5:1.

**6.** Solution de vernis collant à fusion selon l'une quelconque des revendications 1 à 5, caractérisée en ce qu'il s'agit, en ce qui concerne le diacide carboxylique $A_1$, d'acide sébacique, d'acide azélaïque, d'acide téréphtalique ou de mélanges de ceux-ci.

**7.** Solution de vernis collant à fusion selon l'une quelconque des revendications 1 à 6, caractérisée en ce qu'il s'agit, en ce qui concerne le diisocyanate $a_{22}$, de triméthylhexaméthylénediisocyanates.

**8.** Solution de vernis collant à fusion selon l'une quelconque des revendications 1 à 7, caractérisée en ce qu'il s'agit, en ce qui concerne les diisocyanates $A_2$, d'un mélange de 2,4-toluylènediisocyanate, de diphénylméthanediisocyanate et de triméthylhexaméthylènediisocyanates.

**9.** Solution de vernis collant à fusion selon l'une quelconque des revendications 1 à 8, caractérisée en ce que les di- ou polyisocyanates bloqués sont bloqués par des lactames de formule générale

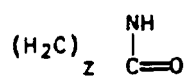

z étant un nombre entier dans la gamme de 3 à 22.

**10.** Utilisation de la solution de vernis collant à fusion selon l'une quelconque des revendications 1 à 9 pour le revêtement de fils métalliques préalablement enduits de vernis isolant électrique.

**11.** Fil revêtu d'un vernis collant à fusion, obtenu avec utilisation d'une solution de vernis collant à fusion selon l'une quelconque des revendications 1 à 9.